Europäisches Patentamt

European Patent Office

Office européen des brevets

(11) Publication number: **0 044 377 B1**

# (12) EUROPEAN PATENT SPECIFICATION

(45) Date of publication of patent specification: **07.08.85**

(51) Int. Cl.⁴: **F 16 D 65/08, F 16 D 51/22**

(21) Application number: **81103275.4**

(22) Date of filing: **30.04.81**

(54) Brake assembly.

(30) Priority: **21.07.80 US 171037**

(43) Date of publication of application:
**27.01.82 Bulletin 82/04**

(45) Publication of the grant of the patent:
**07.08.85 Bulletin 85/32**

(84) Designated Contracting States:
**AT BE CH DE FR GB IT LI LU NL SE**

(56) References cited:
**EP-A-0 001 379**
**GB-A-2 013 800**
**US-A-1 385 482**
**US-A-1 397 225**
**US-A-1 478 969**
**US-A-2 710 076**
**US-A-3 400 787**
**US-A-4 206 834**

(73) Proprietor: **DANA CORPORATION**
**4500 Dorr Street**
**Toledo, OH 43615 (US)**

(72) Inventor: **Chatman, Weeden**
**2441 Sedgefield Lane**
**Montgomery Alabama (US)**
Inventor: **Naing, Than**
**2441 Sedgefield Lane**
**Montgomery Alabama (US)**

(74) Representative: **Dipl.-Phys.Dr. Manitz Dipl.-Ing.**
**Finsterwald Dipl.-Ing. Grämkow Dipl.-Chem.Dr.**
**Heyn Dipl.-Phys.Rotermund**
**B.Sc. Morgan Robert-Koch-Strasse 1**
**D-8000 München 22 (DE)**

Courier Press, Leamington Spa, England.

## Description

This invention relates to a brake assembly and more particularly to an improved brake assembly for trailer axles, of the foundation type.

Brake assemblies of the foundation type generally consist of a brake spider mounted on an axle beam; a pair of anchor pins mounted at one end of the brake spider; a camshaft mounted on an opposite end of the brake spider; a pair of brake shoes pivotally mounted, at one set of ends thereof, on the anchor pins and engageable, at the opposite set of ends thereof, with a cam portion of the camshaft; and a retracting spring operatively interconnecting the brake shoes and pivotally biasing the brake shoes together into yielding engagement with the cam portion of the camshaft.

In such type of assembly, it has been the conventional practice in the prior art to mount the brake shoes on the anchor pins by forming the lower ends of the rib sections of the brake shoes with mounting holes for receiving the anchor pins. Such an arrangement, however, has been found to be undesirable in that considerable time and effort is required to disassemble a brake unit during normal maintenance and servicing operations. More recently, it has become the practice in the industry to fabricate the brake shoes with arcuate bearing surfaces, in lieu of mounting holes, which are seated on the anchor pins for mounting the brake shoes on the brake spider. Such bearing surfaces are maintained in engagement with the anchor pins by means of retainer springs. One example of an arrangement of this kind is disclosed in US—A—4 206 834. While such a design has provided some improvement in such assemblies, it has been found that such design is not sufficiently satisfactory from the viewpoints of simplicity of design, reliability and effectivenes in performance, and ease of maintenance and servicing.

A similar arrangement is also known from US—A—2 710 076 however this latter arrangement features a brake assembly with a backplate rather than a brake spider.

Accordingly, it is the principal object of the present invention to provide an improved brake assembly, including an improved design of the brake shoe and the retainer, in particular for trailer axles of the foundation type.

A further object of the present invention is to provide an improved brake assembly for trailer axles, providing an increased service life of the components thereof.

Another object of the present invention is to provide an improved brake assembly for trailer axles, of the foundation type, which is simple in design, reliable and effective in performance, and adapted to facilitate maintenance and servicing.

In order to satisfy these objects there is provided a brake assembly of the type known from US—A—4 206 835 for a vehicle axle beam, the brake assembly comprising a spider mounted on said beam; a cam-shaft mounted on one end of said spider; a pair of anchor pins mounted on an opposite end of said spider; a pair of brake shoes, each of said brake shoes having at least one bearing surface disposed at one end thereof mounted on an outer portion of one of said anchor pins and a roller mounted on an opposite end thereof operatively engageable with said camshaft; a retainer adjacent the anchor pin ends of said brake shoes, biasingly urging the bearing surfaces of said brake shoes into engagement with said anchor pins; and a spring interconnecting upper portions of said brake shoes and pivotally biasing the upper ends of said brake shoes toward each other into retracted positions; wherein said retainer is a spring element having hook sections at its free ends, characterised in that said retainer encompasses the anchor pin ends of said brake shoes and includes a base section engaging an anchor pin end portion of one of said brake shoes, and a pair of leg sections projecting from end portions of said base section toward the other of said brake shoes, with said hook sections being disposed at the free ends of said leg sections and engaging the other one of said brake shoes in hooking relation.

A brake retracting spring consisting of a single unitary strand of spring steel without helical coils is admittedly known form EP—A—0 001 379; however, this spring is a brake retracting spring and not a brake retainer. Furthermore, its hooked ends engage in holes in the ribs of the brake shoes and do not therefore encompass the ends of the brake shoes.

Further advantageous embodiments of the invention are set forth in the subordinate claims 2 to 5.

Other objects and advantages of the present invention will become more apparent to those persons having ordinary skill in the art to which the present invention pertains from the following description taken in conjunction with the accompanying drawings in which;

Fig. 1 is a perspective view of a brake assembly for a trailer axle, embodying the present invention;

Fig. 2 is a front elevational view of the brake assembly shown in Fig. 1;

Fig. 3 is an enlarged cross-sectional view taken along line 3—3 in Fig. 2;

Fig. 4 is an enlarged cross-sectional view taken along line 4—4 in Fig. 2; and

Fig. 5 is a perspective view of the brake shoe retainer utilized in the assembly shown in Figs. 1 and 2.

Referring to the drawings, there is illustrated a brake assembly 10 of the foundation type, for a trailer axle, which embodies the present invention. Generally, the assembly consists of a brake spider 11, a set of anchor pins 12 and 13 mounted on one end of the brake spider, a camshaft 14 mounted on the other end of the brake spider, a pair of brake shoes 15 and 16 pivotally mounted at one set of ends on anchor pins 12 and 13 and operatively engaging the camshaft at the other set of ends thereof, a brake shoe retainer 17 and a retracting spring 18.

Brake spider 11 essentially consists of a bracket which is adapted to be mounted on the end of an axle beam adjacent a spindle mounted on the end of the beam. It is provided with a cylindrical center opening 19 through which an end of the axle beam is received, a pair of circular openings 20 and 21 at one end thereof in which anchor pins 12 and 13 are mounted, and an opening in the other end thereof in which the camshaft is mounted. Although not specifically shown in the drawings, the brake spider is adapted to be rigidly secured to the axle beam by bolting the brake spider on an annular flange welded on the axle beam or, preferably, by welding the brake spider directly on the axle beam. Generally, the brake spider functions to support the working components of the brake assembly.

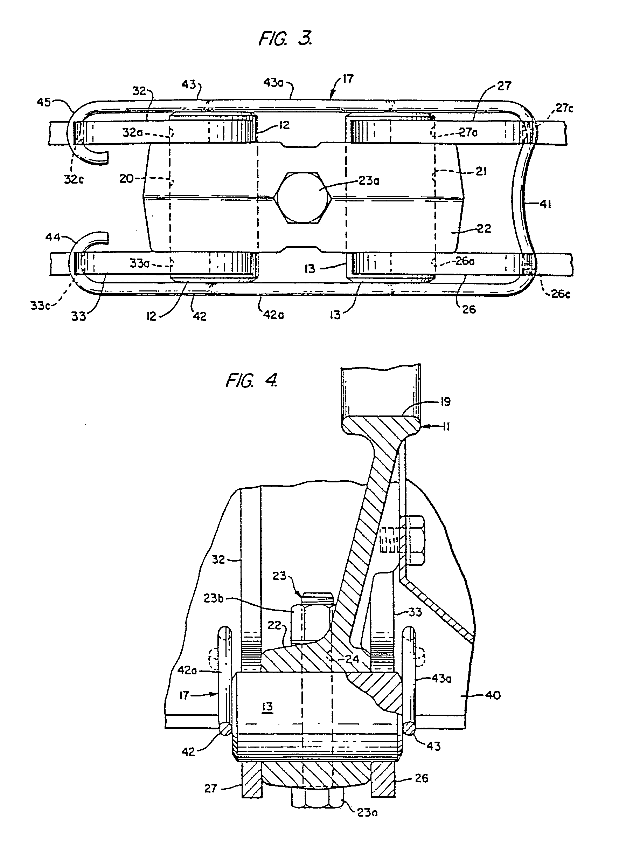

As best shown in Figs. 3 and 4, the one end 22 of the brake spider providing anchor pin holes 20 and 21 is formed with an enlarged longitudinal dimension to accommodate anchor pins 12 and 13. A section of such enlarged end between anchor pin holes 20 and 21 is removed so as to allow a minimal amount of flexing of the lower portion of section 22 relative to the upper portion thereof to facilitate the insertion and removal of anchor pins 12 and 13. When the anchor pins are mounted in anchor pin holes 20 and 21, they may be retained firmly in position by means of a fastener 23 including a bolt 23a inserted through the underside of a bolt hole 24 in enlarged section 22, between anchor pins holes 20 and 21, and a nut 23b threaded on the end of bolt 23a and tightened against an inner surface of enlarged section 22. As shown in Figs. 3 and 4, the lengths of anchor pins 12 and 13 are slightly greater than the lengths of anchor pin holes 20 and 21 so that the end portions of the anchor pins project outwardly of the end surfaces of enlarged section 22 to accommodate the mounting of the brake shoes.

Camshaft 14 consists of a shaft having a S-shaped cam portion 25 mounted on an outer end thereof. The shaft is disposed substantially parallel to the axis of the axle beam. It is supported at an inner end in a conventional slack adjuster mounted on the axle beam and is supported at its outer end in an opening provided in the brake spider. The camshaft is adapted to be rotated about its axis by means of an air cylinder mounted on the axle beam and operatively connected to the slack adjuster.

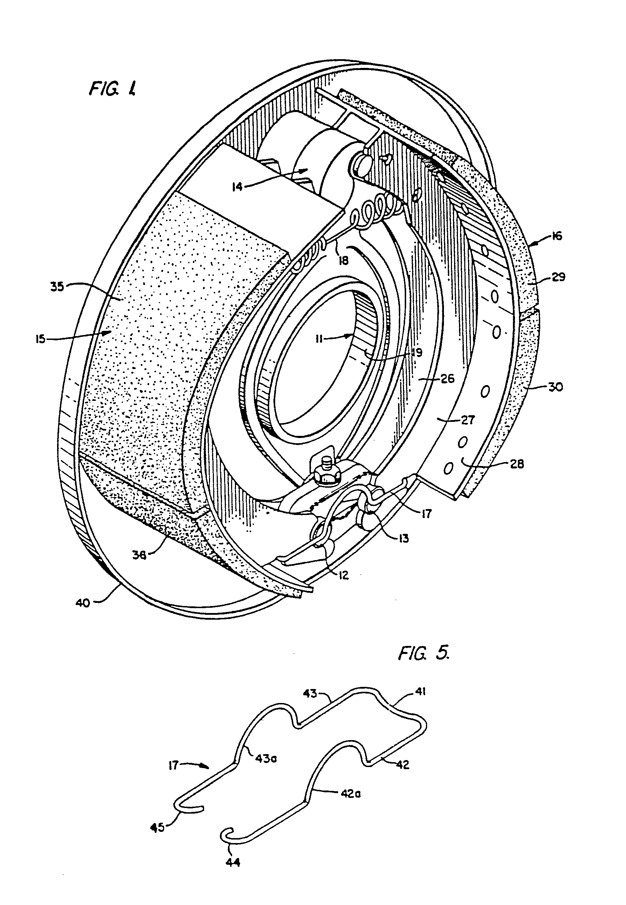

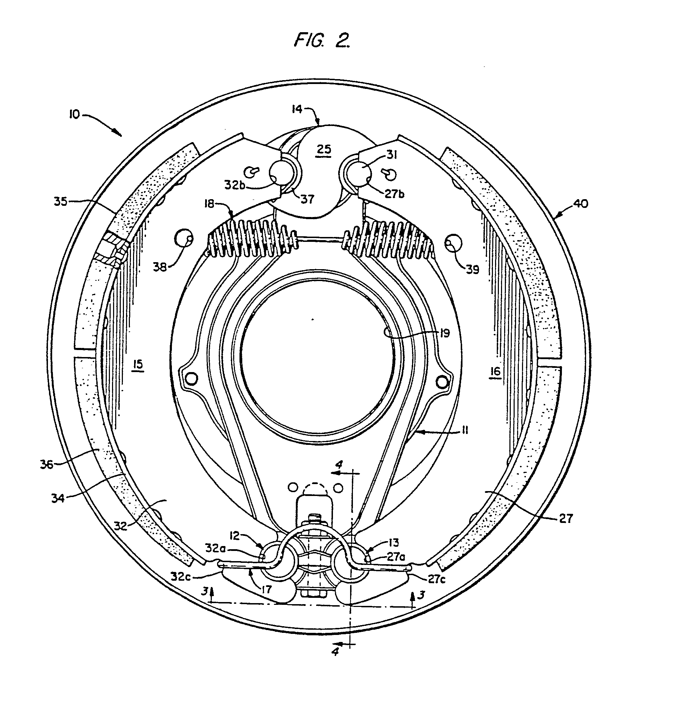

Brake shoe 15 and 16 are substantially similar in construction. As best shown in Figs. 1 and 2, brake shoe 16 includes a pair of arcuately shaped rib sections 26 and 27, a table section 28 and a set of tapered linings 29 and 30. The rib sections are substantially similar in configuration and are provided with arcuate bearing surfaces 26a and 27a at one set of ends thereof which are adapted to engage an outer surface of anchor pin 13, and a set of arcuate bearing surfaces 26b and 27b at an opposite set of ends thereof on which there is seated a roller 31 which engages the cam surface of cam portion 26 of the camshaft. The outer edges of rib sections 26 and 27, at the anchor pin ends thereof, are provided with a pair of aligned notches or recesses 26c and 27c for accommodating retainer 17 as will later be described.

Table section 28 also is arcuately shaped and is mounted on the outer arcuate edges of rib sections 26 and 27, usually by welding. Linings 29 and 30 are mounted on the outer surface of table section 28 by rivets in the conventional manner.

Brake shoe 15 similarly consists of a set of rib sections 32 and 33, a table section 34 and a set of linings 35 and 36. The anchor pin ends of rib sections 32 and 33 are provided with arcuately shaped bearing contact surfaces 32a and 33a which engage an outer portion of anchor pin 12. The cam end of rib sections 32 and 33 are provided with a set of arcuately shaped seating surfaces 32b and 33b on which there is seated a roller 37 which engages cam portion 25 of the camshaft. The outer edges of the rib sections, at the anchor pin ends thereof, are provided with a set of aligned notches or recesses 32c and 33c also for accommodating retainer 17 as will later be described.

Table section 34 also is rigidly secured to the outer edges of the rib sections, usually by welding, and linings 35 and 36 are mounted on the outer surface of the table section by means of rivets, in the conventional manner.

Retracting spring 18 is connected at the ends thereof to a set of pins 38 and 39 provided on the rib sections of the brake shoes. The retracting spring functions to pivotally bias the brake shoes inwardly about the anchor pins so that rollers 31 and 37 firmly engage cam portion 25 of the camshaft, in the conventional manner. It will be appreciated that by operating the air chamber of the axle assembly, the camshaft will be rotated to turn the cam portion of the shaft and pivot the brake shoes outwardly so that the brake linings will engage the brake drum 40.

Referring to Fig. 5, it will be seen that retainer 17 consists of a continuous strand of spring steel and includes a base section 41, a pair of leg sections 42 and 43 provided with arcuate portions 42a and 43a, respectively, and a pair of inwardly turned hook sections 44 and 45. Base section 41, leg sections 42 and 43 and hook portions 44 and 45 lie in substantially the same plane. Arcuate portions 42a and 43a lie in parallel planes disposed substantially perpendicular to the plane of the base, leg and hook sections. When the retainer is mounted in the brake assembly in its assembled condition, as shown in the drawings, base section 41 will be received in notches 26c and 27c, leg sections 42 and 43 will project along the anchor pin ends of rib sections 26 and 27 of brake shoe 16, the end surfaces of anchor pins 12 and 13 and the anchor pin ends of rib sections 32 and 33 of brake shoe 15, and hook sections 44 and 45 will be received within notches 32c and 33c of rib sections 32 and 33 of brake shoe 15, in hooking relation. As best shown in Fig. 2, the base, leg and hook sections of the retainer will lie in a base plane substantially including the axes of anchor pins 12 and 13, and the arcuate portions of the leg sections will be disposed between the anchor pins. It particularly is to be noted that the leg sections, including the arcuate portions thereof, engage the end surfaces of the anchor pins to prevent axial displacement of the anchor pins. Such feature is particularly useful in foundation type brake assemblies similar to the assembly shown in the drawings where the anchor pins are not provided with a clamping arrangement, as previously described.

Although the brake assembly is shown in Fig. 2 with the camshaft in an upper position and the anchor pins in a lower position, when the assembly is installed on an axle mounted on a trailer, the brake will be oriented approximately 112° in a clockwise direction, relative to the position shown in the drawings, so that brake shoe 15 will be disposed on the upper end of the brake and brake shoe 16 will be positioned at the lower end of the brake. To disassemble the brake assembly under such conditions, the hook sections of the retainer are first pried out of notches 32c and 33c of brake shoe 15 to release the anchor pin ends of the shoes. Lower shoe 16 may then be removed by detaching the camshaft end of it from retracting spring 18. Upper shoe 15 is then free to be lifted off of cam portion 25 and anchor pin 12.

With the brake shoes thus removed, the anchor pins may be inspected to determine whether there has been any undue wear, if so, nut 23b of the clamping bolt may be backed off to loosen the anchor pins and permit them to be rotated to provide suitable contact surfaces for the bearing surfaces of the brake shoes. Once the anchor pins have been rotated to the desired positions, nut 23b is turned down to reclamp the anchor pins in the set positions.

Assuming the brake shoes are to be replaced, a replacement brake shoe 15 is positioned in the brake assembly by seating its roller 37 on cam portion 25 and seating bearing surfaces 32a and 33a on anchor pin 12. If not already connected, retracting spring 18 is connected to pin 38 of replacement shoe 15. Replacement shoe 16 is then connected to the other end of retracting spring 18 and roller 31 is permitted to engage cam portion 25 while the opposite end of the lower replacement shoe is permitted to hang below anchor pin 13. The brake assembly is then completed by positioning the base section of a replacement spring in notches 26c and 27c of lower replacement shoe 16, and moving the retainer and anchor pin end of shoe 16 upwardly so that bearing surfaces 26a and 27a of the lower replacement shoe engage the outer surface of anchor pin 13. With the replacement shoes thus positioned, the retainer is pivoted upwardly and the hook sections thereof are pried with a suitable tool into notches 32c and 33c of the upper replacement shoe. The replacement shoes, retracting pin and replacement spring will then be positioned, as shown in the drawings.

Retainer 17 may be formed of any material having a sufficient strength to bias the anchor pin ends of the brake shoes into firm engagement with the outer surfaces of anchor pins 12 and 13. Preferably, such member should be constructed of a corrosion-resistant material. In practice, it has been found that commercially available spring steel materials are suitable for this purpose.

It thus will be seen that the simplicity of design of the aforementioned brake assembly, and particularly the design of the retainer member therefor, provides for a reliable and effective performance of the assembly, and greatly facilitates the assembly and disassembly of the unit for maintenance and servicing requirements.

**Claims**

1. A brake assembly (10) for a vehicle axle having a beam, comprising a spider (11) mounted on said beam; a camshaft (14) mounted on one end of said spider (11); a pair of anchor pins (12, 13) mounted on an opposite end of said spider (11); a pair of brake shoes (15, 16), each of said brake shoes (15, 16) having at least one bearing surface (26a, 27a, 32a, 33a) disposed at one end thereof mounted on an outer portion of one of said anchor pins (12, 13) and a roller (31, 37) mounted on an opposite end thereof operatively engageable with said camshaft (14); a retainer (17) adjacent the anchor pin ends of said brake shoes (15, 16) biasingly urging the bearing surfaces (26a, 27a, 32a, 33a) of said brake shoes into engagement with said anchor pins (12, 13); and a spring (18) interconnecting upper portions of said brake shoes (15, 16) and pivotally biasing the upper ends of said brake shoes (15, 16) toward each other into retracted positions; wherein said retainer is a spring element having hook sections at its free ends, characterised in that said retainer (17) encompasses the anchor pin ends of said brake shoes (15, 16) and includes a base section (41) engaging an anchor pin end portion of one of said brake shoes (15, 16), and a pair of leg sections (42, 43) projecting from end portions of said base section (41) toward the other of said brake shoes (15, 16) with said hook sections (44, 45) being disposed at the free ends of said leg sections (41, 42) and engaging the other one of said brake shoes (15, 16) in hooking relation.

2. A brake assembly (10) according to claim 1 wherein each of said brake shoes (15, 16) includes a pair of rib sections (26, 27, 32, 33), a table section (28, 34) mounted on said rib section (26, 27, 32, 33) and at least one lining element (29, 30, 35, 36) mounted on said table section (28, 34), and wherein said bearing surfaces (26a, 27a, 32a, 33a) are provided at the ends of said rib sections (26, 27, 32, 33), characterised in that the anchor pin ends of the rib sections (26, 27, 32, 33) of said brake shoes include recesses (26c, 27c, 32c, 33c) which receive portions of said base section (41) and hook sections (44, 45) of said retainer.

3. A brake assembly (10) according to either of the preceding claims, characterised in that portions of the leg sections (42, 43) of said retainer (17) engage opposite ends of said anchor pins (12, 13).

4. A brake assembly (10) according to any one of the preceding claims, characterised in that the leg sections (42, 43) of said retainer (17) include arcuate portions (42a, 43a) which are preferably disposed between said anchor pins (12, 13).

5. A brake assembly (10) according to any one of the preceding claims, characterised in that the base section (41), leg sections (42, 43) and hook sections (44, 45) of said retainer (17) lie substantially in a plane including the axes of said anchor pins (12, 13).

**Patentansprüche**

1. Eine Bremsanordnung (10) für eine Fahrzeugachse, die einen Balken besitzt, mit einem an dem Balken angebrachten Bremsträger (11); einer an einem Ende des Bremsträgers (11) angebrachten Nockenwelle (14); einem Paar Ankerstiften (12, 13), die an einem entgegengesetzten Ende des Bremsträgers (11) angebracht sind; einem Paar Bremsbacken (15, 16), wobei jede der Bremsbacken (15, 16) mindestens eine an einem Ende derselben angeordnete Stützfläche (26a, 27a, 32a, 33a) besitzt, die an einem Außenabschnitt eines der Ankerstifte (12, 13) angebracht ist, und eine Walze (31, 37), die an einem entgegengesetzt liegenden Ende derselben angebracht, wirksam mit der Nockenwelle (14) in Eingriff bringbar ist; einem den Ankerstift-Enden der Bremsbacken (15, 16) benachbarten Halteteil (17), das vorspannend die Stützflächen (26a, 27a, 32a, 33a) der Bremsbacken in Eingriff mit den Ankerstiften (12, 13) drängt; und einer obere Anteile der Bremsbacken (15, 16) verbindenden Feder (18), die schwenkbar die oberen Enden der Bremsbacken (15, 16) gegeneinander in zurückgezogene Stellungen vorspannt; wobei das Halteteil ein Federelement mit Hakenabschnitten an seinen freien Enden ist, dadurch gekennzeichnet, daß das Halteteil (17) die Ankerstiftenden der Bremsbacken (15, 16) umgreift und einen an einem Ankerstift-Endenteil einer der Bremsbacken (15, 16) angreifenden Grundabschnitt (41) und ein Paar von Endteilen des Grundabschnittes (41) zu der anderen der Bremsbacken (15, 16) vorstehenden Schenkelabschnitten (42, 43) enthält, wobei die Hakenabschnitte (44, 45) an den freien Enden der Schenkelabschnitte (41, 42) angeordnet sind und mit Hak-Beziehung an der anderen der Bremsbacken (15, 16) angreifen.

2. Eine Bremsanordnung (10) nach Anspruch 1, bei der jede der Bremsbacken (15, 16) eine Paar von Rippenabschnitten (26, 27, 32, 33), einen an dem Rippenabschnitt (26, 27, 32, 33) angebrachten Auflageabschnitt (28, 34) und mindestens ein an dem Auflageabschnitt (28, 34) angebrachtes Belagelement (29, 30, 35, 36) enthält, und bei der die Stützflächen (26a, 27a, 32a, 33a) an den Enden der Rippenabschnitte (26, 27, 32, 33) vorgesehen sind, dadurch gekennzeichnet, daß die Ankerstiftenden der Rippenabschnitte (26, 27, 32, 33) der Bremsbacken Vertiefungen (26c, 27c, 32c, 33c) enthalten, die Anteile des Grundabschnittes (41) und der Hakenabschnitte (44, 45) des Halteteils aufnehmen.

3. Eine Bremsanordnung (10) nach einem der vorangehenden Ansprüche, dadurch gekennzeichnet, daß Anteile der Schenkelabschnitte (42, 43) des Halteteils (17) an entgegengesetzten Enden der Ankerstifte (12, 13) angreifen.

4. Eine Bremsanordnung (10) nach einem der vorangehenden Ansprüche, dadurch gekennzeichnet, daß die Schenkelabschnitte (42, 43) des Halteteils (17) gekrümmte Anteile (42a, 43a) enthalten, die vorzugsweise zwischen den Ankerstiften (12, 13) angeordnet sind.

5. Eine Bremsanordnung (10) nach einem der vorangehenden Ansprüche, dadurch gekennzeichnet, daß der Grundabschnitt (41), Schenkelabschnitte (42, 43) und Hakenabschnitte (44, 45) des Halteteils (17) im wesentlichen in einer die Achsen der Ankerstifte (12, 13) enthaltenden Ebene liegen.

**Revendications**

1. Ensemble de freine (10) pour un essieu de véhicule comportant une poutre, comprenant un plateau de frein (11) monté sur ladite poutre; et un arbre à cames (14) monté sur une première extrémité dudit plateau de frein (11); deux goujons d'ancrage (12, 13) montés sur une extrémité opposée dudit plateau (11); deux mâchoires de frein (15, 16) présentant chacune au moins une surface d'appui (26a, 27a, 32a, 33a) disposée sur une première extrémité montée sur une partie extérieure de l'un desdits goujons d'ancrage (12, 13) et un galet (31, 37) monté sur une extrémité opposée de chaque mâchoire et en contact de travail avec ledit arbre à cames (14); un élément (17) de retenue adjacent aux extrémités goujons d'ancrage desdites mâchoires de frein (15, 16) et sollicitant les surfaces d'appui (26a, 27a, 32a, 33a) desdites mâchoires de frein pour les enclencher avec lesdits goujons d'ancrage (12, 13); et un ressort (18) reliant entre elles les parties supérieures desdites mâchoires de frein (15, 16) et rappelant, par pivotement, les extrémités supérieures desdites mâchoires de frein (15, 16) l'une vers l'autre et vers des positions de retrait; dans lequel ledit élément de retenue est un élément à ressort comportant des sections en crochet à ses extrémités libres, caractérisé en ce que ledit élément (17) de retenue entoure les extrémités goujons d'ancrage desdites mâchoires de frein (15, 16) et comprend une section de base (41) portant contre une partie d'extrémité goujon d'ancrage de l'une des mâchoires de frein (15, 16), et deux branches (42, 43) partant desdites parties extrêmes de ladite section de base (41) vers l'autre desdites mâchoires de frein (15, 16), lesdites sections en crochet (44, 45) étant disposées aux extrémités libres desdites branches (41, 42) et portant contre l'autre desdites mâchoires de frein (15, 16), dans une disposition d'accrochage.

2. Ensemble de frein (10) selon la revendication 1, dans lequel chacune desdites mâchoires (15, 16) comprend deux nervures (26, 27, 32, 33), un plateau (28, 34) monté sur ladite nervure (26, 27, 32, 33) et au moins un élément de garniture (29, 30, 35, 36) monté sur ledit plateau (28, 34), et dans lequel lesdites surfaces d'appui (26a, 27a, 32a, 33a) sont prévues aux extrémités desdites nervures (26, 27, 32, 33), caractérisé en ce que les extrémités goujons d'ancrage des nervures (26, 27, 32, 33) desdites mâchoires de frein présentent des évidements (26c, 27c, 32c, 33c) qui reçoivent des parties de ladite section de base (41) et des sections en crochet (44, 45) dudit élément de retenue.

3. Ensemble de frein (10) selon l'une des revendications précédentes, caractérisé en ce que des parties des branches (42, 43) dudit élément de retenue (17) portent contre les extrémités opposées desdits goujons d'ancrage (12, 13).

4. Ensemble de frein (10) selon l'une quelconque des revendications précédentes, caractérisé en ce que les branches (42, 43) dudit élément de retenue (17) comprennent des tronçons incurvés (42a, 43a) qui sont avantageusement disposés entre lesdits goujons d'ancrage (12, 13).

5. Ensemble de frein (10) selon l'une quelconque des revendications précédentes, caractérisé en ce que la base (41), les branches (42, 43) et les sections en crochet (44, 45) dudit élément (17) de retenue s'étendent sensiblement dans un plan contenant les axes desdits goujons d'ancrage (12, 13).

0 044 377

FIG. 1

FIG. 5.

FIG. 2.

*FIG. 3.*

*FIG. 4.*